Europäisches Patentamt

European Patent Office

Office européen des brevets

(11) Publication number: **0 221 245**
**A2**

## (12) EUROPEAN PATENT APPLICATION

(21) Application number: 86110211.9

(22) Date of filing: 24.07.86

(51) Int. Cl.⁴: **F16K 21/00** , F16L 27/08

(30) Priority: 07.11.85 FI 854394

(43) Date of publication of application:
13.05.87 Bulletin 87/20

(84) Designated Contracting States:
AT BE CH DE FR GB IT LI LU NL SE

(71) Applicant: **ORAS OY**
**Rauhankatu 28**
**SF-26100 Rauma(FI)**

(72) Inventor: **Koppanen, Jorma Tapani**
**Puolukkatie 31**
**SF-26660 Rauma(FI)**

(74) Representative: **UEXKÜLL & STOLBERG**
**Patentanwälte**
**Beselerstrasse 4**
**D-2000 Hamburg 52(DE)**

(54) **A resilient ring-like gasket for a water fixture.**

(57) A resilient ring-like gasket (7) for a water fixture, the gasket serving as a seal between two parts situated one inside the other and moving in relation to each other, especially between the swivel spout of a water tap and the cylindrical body part inside it. The purpose is to provide sufficient sealing at both low and higher pressures while the force required for swiveling the moving part, i.e. the spout, remains constantly low. This is achieved by linking to a round part (9) resembling an O-ring a lip gasket (II) which faces the water under pressure. The round part (9) is dimensioned so as to have a compression smaller than that of a normal O-ring gasket, and in addition that part of it which faces away from the lip gasket may have been cut flat (I0). The width of the outermost surface (I3) of the lip part (II) is somewhat greater than the diameter of the circle part (9).

Fig. 2

## A resilient ring-like gasket for a water fixture

The object of the present invention is a resilient ring-like gasket for a water fixture, intended for serving as a seal between two parts situated one inside the other and arranged to move in relation to each other, especially for sealing the swivel spout of a water tap.

Although the invention relates to any gasket for a water fixture, aiming at reliable sealing but at the same time allowing the parts to move relative to each other, it will be described below specifically in connection with the sealing of a swivel spout of a water tap.

The greatest problems at the sealing point discussed have been large fluctuation of pressure and the friction caused by sealing. Pressure on the gasket is greatest when the tap is fully open, at which time the pressure is approximately the same as the dynamic pressure in the water supply network. When the tap is closed, the gaskets are subjected to the low pressure (~ 150 mm waterhead) caused by the water remaining in the spout.

So far, an O-ring or a lip gasket have primarily been used at the point discussed, and each of these has its own advantages and disadvantages.

In O-ring sealing it is possible, with rather small compression, to maintain at a moderate level the friction, i.e. the force required for swiveling the spout, but in this case the problem is its sealing ability under high pressures. Respectively, with great compression, good resistance to pressure is achieved but the force required for swiveling the spout may be very great.

With a lip gasket, a good resistance to pressure is achieved under high pressures, since the lip folds and presses more tightly under pressure, and also the friction remains low. The disadvantage is resistance to pressure at low pressures, i.e. when the tap is closed or only slightly open, at which time the gasket-opening force caused by pressure is lacking.

The object of the present invention is to eliminate the above-mentioned problems and to provide a gasket which makes reliable sealing at different pressures possible without requiring immoderate force for moving the sealed part. This is achieved by using a new gasket design, which comprises a combination of a suitably dimensioned lip gasket and an O-ring gasket. The main characteristics of the invention are given in accompanying Claim I, and its preferred embodiments are given in the unindependent Claims 2-4.

In the invention it is advantageous if the dimension of the round part, i.e. the circle segment, has a smaller compression than in normal O-ring gaskets, in which case the friction is low but the sealing is still sufficient at low pressures. The lip-like part of the gasket provides good resistance to pressure at high pressures without the friction increasing immoderately.

The invention is described below in the form of an example and with reference to the accompanying drawing, in which

Figure I depicts diagrammatically and partly in section a so-called lever tap, which is equipped with gaskets according to the invention and

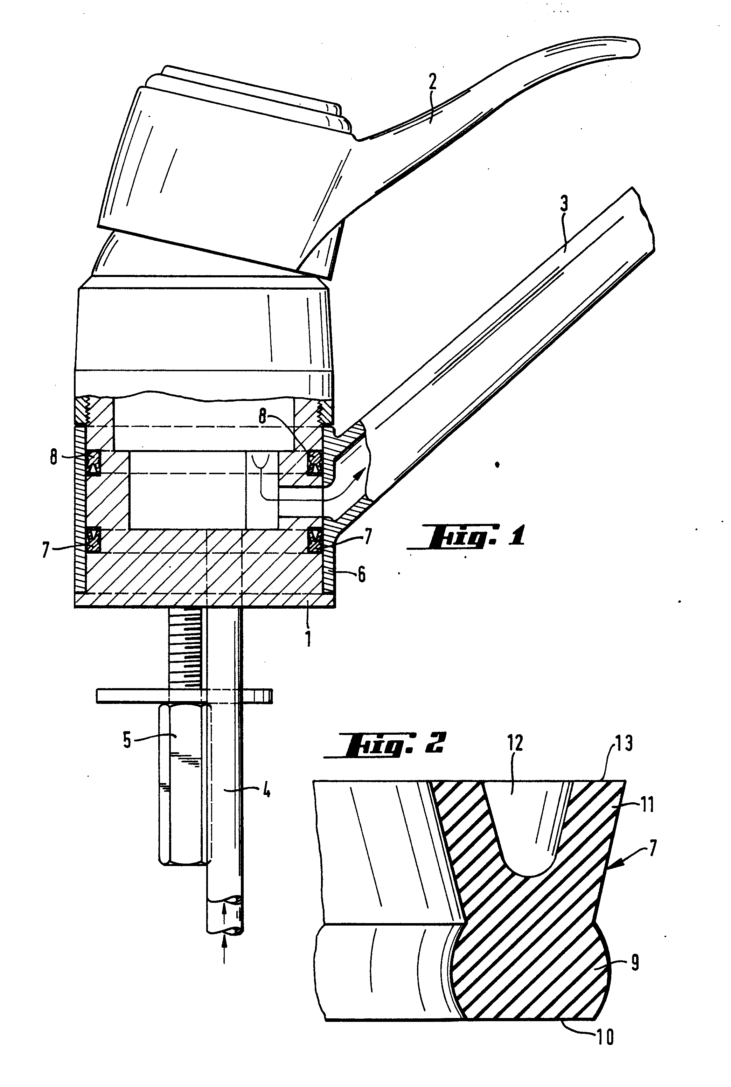

Figure 2 depicts on a larger scale a cross section of the gasket according to the invention.

In Figure I, reference numeral I indicates the body part of the lever tap; when installed, the lower surface of this part is in contact with, for example, the top of a sink unit or a worktop. Numeral 2 indicates the single-grip lever of the tap; the temperature and quantity of water are adjusted in a known manner by moving the lever. Numeral 3 indicates the water spout, which can be swiveled, for example, in order to run water alternatively into either one of two basins. Reference numeral 4 indicates the feed pipe for hot water and, behind it, the feed pipe for cold water, and numeral 5 indicates the fixing screw of the tap.

At the root of the spout 3 there is, constituting one unit with it, a sleeve-like part 6 which fits around the cylindrical body part I and is sealed in relation to it by means of gasket rings 7 and 8 according to the invention. The parts mixing the water and regulating the quantity of water, usually a package made up of two ceramic plates, are well known to an expert in the art and are not important in terms of the present invention, for which reason they are not described here.

A cross section of the gasket ring is shown in Figure 2. That part of the gasket ring which faces away from the water under pressure, in the case of gasket ring 7 the lower part 9 of the gasket, has the shape of part of a circle, i.e. a circle segment. The said part serves as an O-ring, but it has been dimensioned to have a smaller compression than an ordinary O-ring, but so that the sealing produced by it is sufficient at low pressures.

To the ring-like part there is linked, on that side which faces the water under pressure, a V-shaped lip gasket II, the root of which is approximately as wide as the segment surface I0 of the circular part, and at its flat tip surface I3 it is slightly wider than the diameter of the circle. The notch I2 of the lip gasket is, of course, turned towards the pressure side in the normal manner, i.e. the notches I2 of the gasket rings 7 and 8 face each other.

A further example of the dimensioning of the gasket according to the invention is given below.

Diameter of gasket ring 40.5
Height of the gasket ring 5.0
Diameter of the circular part 3.3
Height of the circular part 2.0
Width of the V-part 4.2
Material nitrile rubber

Practical experiments have shown that a gasket according to the invention provides good sealing in all operating situations, also when the tap is closed, the force required for swiveling the spout, nevertheless, remaining small.

## Claims

I. A resilient ring-like gasket (7, 8) for a water fixture, the gasket being intended for serving as a seal between two parts (I, 6) situated one inside the other and arranged to move in relation to each other, especially for sealing a swivel spout (3) of a water tap,
**characterized in** that on one side the cross section of the gasket ring (7, 8) is part of a circle (9) and ont eh other side a substantially V-shaped lip (II) adjoining this circle part, its notch (I2) facing away from the circle part (9).

2. A gasket according to Claim I, **characterized in** that the lower and upper sides (I0, I3) of the gasket ring (7, 8) are substantially flat, one (I0) being a circle secant and the other (I3) the tip surface of the arms of the V-shaped lip gasket.

3. A gasket according to Claim I or 2, **characterized in** that the circle part (9) is dimensioned to have a smaller compression than a normal O-ring gasket.

4. A gasket according to any of the above Claims I-3, **characterized in** that the width of the V-shaped lip (II) exceeds the diameter of the circle.

*Fig: 1*

*Fig: 2*